# EUROPEAN PATENT APPLICATION

(11) **EP 4 852 087 A1**
(43) Date of publication of application: **09.12.2026**
(21) Application number: 25748228.1
(22) Date of filing: 20.01.2025
(51) Int. Cl.: H01M 4/38, H01M 4/36

(54) **NEGATIVE ELECTRODE ACTIVE MATERIAL AND BATTERY**

(30) Priority: 31.01.2024 JP 2024013699
(71) Applicant: Panasonic Intellectual Property Management Co., Ltd., Kadoma-shi, Osaka 571-0057 (JP)
(72) Inventor: TAKAHASHI, Chihiro, kadoma-shi, Osaka 571-0057 (JP); SATO, Shin, kadoma-shi, Osaka 571-0057 (JP)
(74) Representative: Novagraaf International SA
(86) International application number: PCT/JP2025/001639
(87) International publication number: WO 2025/164419

(57) **Abstract**

A negative electrode active material 10 of the present disclosure includes a silicon-containing particle 11 and a coating layer 12 covering at least a part of the surface of the silicon-containing particle 11. The coating layer 12 contains a boron-containing compound and a fluorine-containing hydrophobic polymer.

## Description

### TECHNICAL FIELD

The present disclosure relates to a negative electrode active material and a battery.

### BACKGROUND ART

In recent years, secondary batteries such as lithium-ion batteries have been widely used as power sources for electronic devices such as mobile terminals, power sources for vehicles such as electric vehicles, etc. In recent years, the use of materials containing silicon (Si) has been attracting attention as negative electrode active materials having a high theoretical capacity density. As materials containing silicon, for example, a material in which silicon particles are dispersed in a SiO₂ phase, a material in which silicon particles are dispersed in a lithium silicate phase containing Li, Si, and O, etc., are known.

PATENT LITERATURE 1 discloses a negative electrode material including a lithiated silicon oxide material, an inorganic coating layer, and a polymer coating layer. In the negative electrode material, the inorganic coating layer contains a compound containing at least one of phosphorus element, aluminum element, and boron element, and the polymer coating layer contains a hydrophobic polymer. In the negative electrode material disclosed in PATENT LITERATURE 1, a lithiated silicon oxide material is used to enhance initial charge-discharge efficiency, and furthermore, durability and hydrogen generation issues are addressed by the inorganic coating layer and the polymer coating layer.

### CITATION LIST

### Patent Literature

| | |
|---|---|
| PATENT LITERATURE 1: | WO 2021/022821 A1 |

### SUMMARY OF INVENTION

### Technical Problem

However, although the coating layer in the negative electrode material disclosed in PATENT LITERATURE 1 is effective in addressing durability and hydrogen generation issues, the initial charge-discharge efficiency of a battery decreases due to the provision of the coating layer. As such, the negative electrode material disclosed in PATENT LITERATURE 1 has room for improvement in battery characteristics.

The present disclosure provides a technology for a negative electrode active material using a material containing silicon, which can suppress a decrease in battery characteristics caused by the provision of a coating layer, specifically suppress a decrease in the initial charge-discharge efficiency of a battery, while also suppressing an increase in the internal resistance of the battery.

### Solution to Problem

A negative electrode active material of the present disclosure includes:
a silicon-containing particle; and
a coating layer covering at least a part of a surface of the silicon-containing particle, wherein
the coating layer contains a boron-containing compound and a fluorine-containing hydrophobic polymer.

### Advantageous Effects of Invention

According to the technology of the present disclosure, for a negative electrode active material using a material containing silicon, it is possible to suppress a decrease in battery characteristics caused by the provision of a coating layer, specifically suppress a decrease in the initial charge-discharge efficiency of a battery, while also suppressing an increase in the internal resistance of the battery.

### BRIEF DESCRIPTION OF THE DRAWINGS

FIG. 1 is a cross-sectional view showing a schematic configuration of an example of a negative electrode active material according to Embodiment 1.
FIG. 2 is a cross-sectional view showing a schematic configuration of an example in which a silicon-containing particle in the negative electrode active material in FIG. 1 is a particle of a composite material containing Si.
FIG. 3 is a vertical cross-sectional view schematically showing an example of a battery according to Embodiment 2.

### DESCRIPTION OF EMBODIMENTS

Hereinafter, embodiments of the present disclosure will be described in detail with reference to the drawings. The present disclosure is not limited to the following embodiments.

### (Embodiment 1)

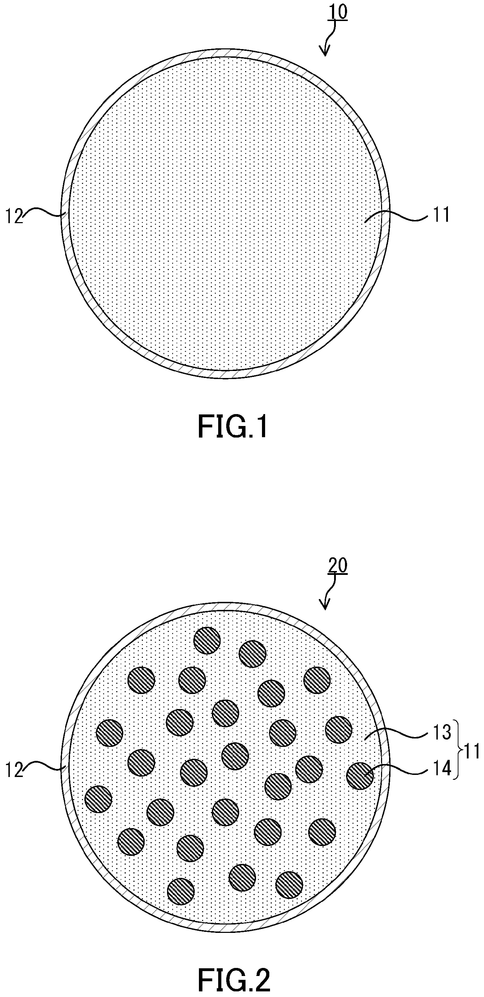

FIG. 1 is a cross-sectional view showing a schematic configuration of an example of a negative electrode active material according to Embodiment 1. A negative electrode active material 10 according to Embodiment 1 includes a silicon-containing particle 11 and a coating layer 12 covering at least a part of the surface of the silicon-containing particle 11. The coating layer 12 contains a boron-containing compound and a fluorine-containing hydrophobic polymer.

By the coating layer 12 containing the fluorine-containing hydrophobic polymer, a favorable SEI (Solid Electrolyte Interphase) derived from fluorine atoms, such as LiF, is easily formed. This facilitates the insertion and extraction of lithium ions into and from the negative electrode active material 10, and can effectively suppress side reactions between the negative electrode active material 10 and the electrolyte of a battery. Accordingly, the coating layer 12 of the negative electrode active material 10 according to Embodiment 1 can suppress a decrease in battery characteristics caused by the provision of a coating layer, specifically a decrease in the initial charge-discharge efficiency of the battery. Furthermore, by the coating layer 12 containing the boron-containing compound, it is possible to suppress an increase in resistance caused by the fluorine-containing hydrophobic polymer. Furthermore, by combining the boron-containing compound with the fluorine-containing hydrophobic polymer, the retention of the boron-containing compound on the surface of the silicon-containing particle 11 is improved, and the surface of the silicon-containing particle 11 is effectively covered with the boron-containing compound. That is, the coating layer 12 of the negative electrode active material 10 according to Embodiment 1 can achieve excellent coatability of the boron-containing compound. Accordingly, the negative electrode active material 10 according to Embodiment 1 can effectively suppress an increase in resistance caused by the provision of a coating layer.

Due to the above, since the negative electrode active material 10 according to Embodiment 1 includes the coating layer 12 containing the boron-containing compound and the fluorine-containing hydrophobic polymer, it is possible to suppress a decrease in the initial charge-discharge efficiency of the battery caused by the provision of a coating layer while also suppressing an increase in the internal resistance of the battery.

Each component of the negative electrode active material 10 according to Embodiment 1 will be specifically described below.

### (Coating Layer)

As described above, the coating layer 12 covers at least a part of the surface of the silicon-containing particle 11 and contains the boron-containing compound and the fluorine-containing hydrophobic polymer. The coating layer 12 may be a layer containing a mixture of the boron-containing compound and the fluorine-containing hydrophobic polymer, or may be a layer composed of a mixture of the boron-containing compound and the fluorine-containing hydrophobic polymer. In the coating layer 12, the mixture of the boron-containing compound and the fluorine-containing hydrophobic polymer may be a mixture in which the boron-containing compound and the fluorine-containing hydrophobic polymer are mixed three-dimensionally and randomly, or may be a mixture in which the boron-containing compound and the fluorine-containing hydrophobic polymer are mixed such that the mixture has an overall uniform composition.

The boron-containing compound includes at least one selected from the group consisting of H₃BO₃, Li₂B₄O₇, LiBO₂, Na₂B₄O₇, NaBO₂, K₂B₄O₇, KBO₂, hydrates of H₃BO₃, hydrates of Li₂B₄O₇, hydrates of LiBO₂, hydrates of Na₂B₄O₇, hydrates of NaBO₂, hydrates of K₂B₄O₇, and hydrates of KBO₂. By containing the above compound as the boron-containing compound in the coating layer 12, the negative electrode active material 10 according to Embodiment 1 can effectively suppress a decrease in the initial charge-discharge efficiency of the battery while also suppressing an increase in the internal resistance of the battery.

The boron-containing compound may contain lithium (Li). When the boron-containing compound is a compound containing Li, the negative electrode active material 10 according to Embodiment 1 can improve the charge-discharge cycle characteristics of the battery.

The amount of the boron-containing compound adhering to the surface of the silicon-containing particle 11 (hereinafter sometimes referred to as "supported amount of the boron-containing compound") may be 1 mass% or more or 2 mass% or more with respect to the mass of the silicon-containing particle 11. The supported amount of the boron-containing compound may be 10 mass% or less. For example, the supported amount of the boron-containing compound may be 1 mass% or more and 10 mass% or less, may be 2 mass% or more and 10 mass% or less, may be 1 mass% or more and 6 mass% or less, or may be 2 mass% or more and 6 mass% or less.

When the supported amount of the boron-containing compound is 1 mass% or more, the surface of the silicon-containing particle 11 can be sufficiently covered with the boron-containing compound, and the effect of the boron-containing compound (that is, the effect of suppressing an increase in resistance caused by the fluorine-containing hydrophobic polymer) is easily obtained. When the supported amount of the boron-containing compound is 6 mass% or less, a low-resistance coating layer 12 and a low-resistance negative electrode active material 10 are easily obtained. When the coating layer 12 containing the boron-containing compound and the fluorine-containing hydrophobic polymer is to be formed, for example, an amount of the boron-containing compound in the above range is supported on the surface of the silicon-containing particle 11.

The fluorine-containing hydrophobic polymer may have good binding properties and thermal fusibility. In this case, the boron-containing compound can be firmly supported on the surface of the silicon-containing particle 11 by the fluorine-containing hydrophobic polymer, thereby making it easier to obtain the effects of the boron-containing compound (for example, the effect of reducing the resistance increased by the fluorine-containing hydrophobic polymer). The fluorine-containing hydrophobic polymer is almost insoluble in water.

The fluorine-containing hydrophobic polymer may include at least one selected from the group consisting of polyvinylidene fluoride (PVDF), polytetrafluoroethylene, perfluoroalkoxy alkane, perfluoroethylene propene copolymer, ethylene tetrafluoroethylene copolymer, polychlorotrifluoroethylene, and ethylene chlorotrifluoroethylene copolymer. The fluorine-containing hydrophobic polymer may include PVDF. When the fluorine-containing hydrophobic polymer is PVDF, a decrease in charge-discharge efficiency can be effectively suppressed. Furthermore, since PVDF has good binding properties, it is possible to firmly support the boron-containing compound on the surface of the silicon-containing particle 11, thereby making it easier to obtain the effects brought about by the boron-containing compound being supported on the surface of the silicon-containing particle 11 (for example, the effect of reducing the resistance increased by the fluorine-containing hydrophobic polymer). Also, when the fluorine-containing hydrophobic polymer is PVDF, since PVDF has a low melting point, the effect of being able to form the coating layer 12 at a low heat treatment temperature can also be obtained.

The fluorine-containing hydrophobic polymer may include, in addition to PVDF, a polymer including vinylidene fluoride units. Examples of the polymer including vinylidene fluoride units include copolymers of vinylidene fluoride with other monomers. Examples of the other monomers include hexafluoropropylene (HFP) and tetrafluoroethylene (TFE). Examples of the polymer including vinylidene fluoride units include polyvinylidene fluoride and modified products thereof, vinylidene fluoride-hexafluoropropylene copolymer, and vinylidene fluoride-chlorotrifluoroethylene copolymer. In the polymer including vinylidene fluoride units, the content rate of vinylidene fluoride units is, for example, 30 mol% or more, and may be 50 mol% or more.

The amount of the fluorine-containing hydrophobic polymer adhering to the surface of the silicon-containing particle 11 (hereinafter sometimes referred to as "supported amount of the fluorine-containing hydrophobic polymer") may be 1 mass% or more or 2 mass% or more with respect to the mass of the silicon-containing particle 11. The supported amount of the fluorine-containing hydrophobic polymer may be 10 mass% or less. For example, the supported amount of the fluorine-containing hydrophobic polymer may be 1 mass% or more and 10 mass% or less, may be 2 mass% or more and 10 mass% or less, may be 1 mass% or more and 6 mass% or less, or may be 2 mass% or more and 6 mass% or less.

When the supported amount of the fluorine-containing hydrophobic polymer is 1 mass% or more, a sufficient effect of improving the retention of the boron-containing compound on the surface of the silicon-containing particle 11 by the fluorine-containing hydrophobic polymer is obtained. When the supported amount of the fluorine-containing hydrophobic polymer is 6 mass% or less, a low-resistance coating layer 12 is easily obtained.

When the coating layer 12 contains the boron-containing compound and PVDF as the fluorine-containing hydrophobic polymer, the supported amount of the boron-containing compound and the supported amount of the fluorine-containing hydrophobic polymer are determined by the following method.

The negative electrode active material 10 is washed with N-methyl-2-pyrrolidone (NMP) to dissolve the fluorine-containing hydrophobic polymer, and the difference in mass before and after dissolution is determined as the mass of the fluorine-containing hydrophobic polymer. Then, the residue that does not dissolve in NMP is washed with water to dissolve the boron-containing compound. The mass of the boron-containing compound dissolved in water is determined by quantitative analysis such as inductively coupled plasma atomic emission spectrometry (ICP).

The mass of the residue that does not dissolve in water and NMP is determined as the mass of the silicon-containing particle 11. When the silicon-containing particle 11 includes a conductive layer on the surface thereof, the residue that does not dissolve in water and NMP is quantitatively analyzed for carbon using a carbon/sulfur analyzer or the like. The determined amount of carbon is derived from a carbon material in the conductive layer. A value obtained by subtracting the mass of carbon determined by analysis from the mass of the residue that does not dissolve in water and NMP is determined as the mass of the silicon-containing particle 11.

Using the mass of the fluorine-containing hydrophobic polymer and the mass of the silicon-containing particle 11 obtained above, the supported amount of the fluorine-containing hydrophobic polymer is determined by the formula: (mass of fluorine-containing hydrophobic polymer/mass of silicon-containing particle) × 100. Using the mass of the boron-containing compound and the mass of the silicon-containing particle 11 obtained above, the supported amount of the boron-containing compound is determined by the formula: (mass of boron-containing compound/mass of silicon-containing particle) × 100.

The mass of the fluorine-containing hydrophobic polymer adhering to the surface of the silicon-containing particle may be 0.5 times or more and 2 times or less the mass of the boron-containing compound adhering to the surface of the silicon-containing particle. That is, the supported amount of the fluorine-containing hydrophobic polymer may be 0.5 times or more and 2 times or less the supported amount of the boron-containing compound. By the supported amount of the fluorine-containing hydrophobic polymer and the supported amount of the boron-containing compound satisfying such a quantitative relationship, a sufficient effect of improving the retention of the boron-containing compound on the surface of the silicon-containing particle 11 by the fluorine-containing hydrophobic polymer is obtained. Therefore, by further improving the coatability of the boron-containing compound, it is possible to improve the initial charge-discharge efficiency while suppressing an increase in the internal resistance of the battery.

The thickness of the coating layer 12 is desirably small so as not to substantially affect the average particle diameter of the negative electrode active material. From the viewpoint of protecting the silicon-containing particle 11 from an electrolyte solution, the thickness of the coating layer 12 may be 1 nm or more. From the viewpoint of suppressing an increase in resistance, the thickness of the coating layer 12 may be 300 nm or less. When the silicon-containing particle 11 includes a conductive layer, the thickness of the coating layer 12 may be smaller than the thickness of the conductive layer. The thickness of the coating layer 12 can be measured by observing a cross-section of the negative electrode active material with a scanning electron microscope (SEM) or a transmission electron microscope (TEM).

### (Silicon-Containing Particle)

In this description, the silicon-containing particle 11 refers to a particle of a material containing Si. Examples of the material containing Si include Si, Si alloys, Si compounds, and composite materials containing Si.

The silicon-containing particle 11 may be, for example, a particle of a composite material containing Si. The negative electrode active material 10 containing a composite material containing Si can enhance the initial charge-discharge efficiency of the battery.

FIG. 2 is a cross-sectional view showing a schematic configuration of an example of the case where the silicon-containing particle 11 in the negative electrode active material 10 in FIG. 1 is a particle of a composite material containing Si. In the negative electrode active material 20 of this example, the silicon-containing particle 11 includes, for example, an ion-conducting phase 13 and a silicon phase 14 dispersed in the ion-conducting phase 13. Hereinafter, the silicon-containing particle 11 having such a configuration is referred to as composite particle 11. The stress caused by expansion and contraction of the silicon phase 14 during charge and discharge is alleviated by the ion-conducting phase 13, thereby suppressing cracks and fractures in the composite particle 11. Therefore, both an increase in capacity due to silicon being contained and an improvement in charge-discharge cycle characteristics can be achieved.

The average particle diameter of the composite particle 11 may be 1 µm or more and 25 µm or less, or 4 µm or more and 15 µm or less. With the above configuration, the stress caused by change in the volume of the composite particle 11 during charge and discharge is easily alleviated, and good charge-discharge cycle characteristics are easily obtained. In addition, the surface area of the composite particle 11 becomes appropriate, thereby suppressing a decrease in capacity due to side reactions with the electrolyte of the battery.

The average particle diameter of the composite particle 11 means a particle diameter at which a volumetric integrated value is 50% in a particle size distribution measured by a laser diffraction scattering method (volume-average particle diameter). For the measurement apparatus, "LA-750", manufactured by HORIBA, Ltd., may be used, for example.

The composite particle 11 can be taken out of the battery by the following method, for example. The following method is an example.

First, the battery in a fully discharged state is disassembled to take out a negative electrode, and the negative electrode is washed with, for example, anhydrous ethyl methyl carbonate or dimethyl carbonate to remove the non-aqueous electrolyte component. A negative electrode mixture layer is peeled from a current collector (for example, copper foil) that is a negative electrode core, and the mixture layer is crushed with a mortar to obtain a sample powder. Next, the sample powder is dried in a dry atmosphere for 1 hour and immersed in, for example, gently boiled 6M hydrochloric acid for about 10 minutes to remove elements derived from components other than the composite particle. Next, the sample powder is washed with ion-exchanged water, filtered, and dried at 200°C for 1 hour, for example. The fully discharged state is a state where a depth of discharge (DOD) is 90% or more (the state of charge (SOC) is 10% or less).

The ion-conducting phase 13 may be composed of one phase or multiple phases.

The ion-conducting phase 13 includes at least one selected from the group consisting of a lithium-containing phase and a carbon phase, for example. The lithium-containing phase and the carbon phase have excellent ionic conductivity. Therefore, when the ion-conducting phase 13 includes at least one selected from the group consisting of a lithium-containing phase and a carbon phase, ions such as Li ions are more smoothly occluded and released by the silicon phase 14 through the ion-conducting phase 13. This results in improved battery characteristics such as initial charge-discharge efficiency and charge-discharge cycle characteristics of the battery.

Since the carbon phase has electrical conductivity, even if voids are formed around the composite particle 11, the contact between the composite particle 11 and its surroundings is easily maintained. This results in improved battery characteristics such as initial charge-discharge efficiency and charge-discharge cycle characteristics of the battery. The carbon phase may be composed of amorphous carbon. The amorphous carbon may be hard carbon, soft carbon, or other carbon. Amorphous carbon generally refers to a carbon material in which an average interlayer spacing d002 of the (002) plane, measured by X-ray diffraction, exceeds 0.34 nm.

The lithium-containing phase may include at least one selected from the group consisting of a lithium aluminate phase and a lithium silicate phase. The lithium aluminate phase and the lithium silicate phase have better ionic conductivity. Therefore, when the ion-conducting phase 13 includes at least one selected from the group consisting of the lithium aluminate phase and the lithium silicate phase, ions such as Li ions are further smoothly occluded and released by the silicon phase 14 through the ion-conducting phase 13. This results in improved battery characteristics such as initial charge-discharge efficiency and charge-discharge cycle characteristics of the battery. In addition, when the ion-conducting phase 13 includes at least one selected from the group consisting of the lithium aluminate phase and the lithium silicate phase, the influence of expansion and contraction of the silicon phase 14 is alleviated by the ion-conducting phase 13.

Lithium silicate is a silicate containing lithium (Li), silicon (Si), and oxygen (O). The lithium silicate may also contain, as another element M1, an element such as magnesium (Mg), calcium (Ca), strontium (Sr), barium (Ba), aluminum (Al), boron (B), rare earth elements (for example, lanthanum (La)), and the like. The atomic ratio (O/Si) of O to Si in the lithium silicate is, for example, greater than 2 and less than 4. When the atomic ratio O/Si is greater than 2 and less than 4 (in a formula described later, 0 < z < 2), it is advantageous in terms of the stability and lithium-ion conductivity of the lithium silicate phase. Preferably, the atomic ratio O/Si is greater than 2 and less than 3. The atomic ratio Li/Si of Li to Si in the lithium silicate is, for example, greater than 0 and less than 4. In this description, the stability of the lithium aluminate phase includes both the chemical stability (alkali resistance) and the thermal stability of the lithium aluminate phase.

The composition of the lithium silicate can be represented by the formula: Li_{2z}SiO_{2+z} (0 < z < 2). From the viewpoint of stability, ease of production, and lithium-ion conductivity, it is preferable that z satisfies a relationship of 0 < z < 1, and z = 1/2 is more preferable. Lithium silicate that satisfies z = 1/2 can be represented by Li₂Si₂O₅.

Lithium aluminate is an aluminate containing lithium (Li), aluminum (Al), and oxygen (O). The atomic ratio O/Al of O to Al in the lithium aluminate is, for example, 1.6 or more and 4 or less. Also, the atomic ratio of Li to Al (Li/Al) in the lithium aluminate is, for example, 1/5 or more and 5 or less. When these atomic ratios are within the above ranges, the stability and ionic conductivity of the lithium aluminate phase become better. In this description, the stability of the lithium aluminate phase includes both the chemical stability (alkali resistance) and the thermal stability of the lithium aluminate phase.

The lithium aluminate phase may further contain an element M2 in addition to Li, Al, and O. An example of the element M2 is at least one selected from the group consisting of calcium (Ca), magnesium (Mg), zirconium (Zr), iron (Fe), boron (B), phosphorus (P), and lanthanum (La).

The element M2 may form a compound. The compound may be, for example, an oxide of the element M2 or an aluminate of the element M2, depending on the type of the element M2.

The element M2 may be B. That is, the lithium aluminate phase may further contain B. By adding the element M2, for example, the stability and ionic conductivity of the lithium aluminate phase are improved. Also, by adding the element M2, the porosity of the composite particle 11 can be reduced. Accordingly, the number of portions that can become starting points of cracks and fractures when charge and discharge are repeated is reduced. Therefore, deterioration of the negative electrode active material is suppressed, and the charge-discharge cycle characteristics of the battery are further improved.

The lithium aluminate phase may further contain trace amounts of elements such as chromium (Cr), nickel (Ni), manganese (Mn), copper (Cu), and molybdenum (Mo).

The lithium aluminate phase may be amorphous. In this case, the influence of expansion and contraction of the silicon phase 14 can be more effectively alleviated.

A fine Al₂O₃ phase having high crystallinity may be dispersed in the lithium aluminate phase. The Al₂O₃ phase is distributed in the form of islands in the matrix of the lithium aluminate phase, for example. In this case, expansion and cracks of the lithium aluminate phase due to expansion and contraction of the silicon phase 14 are easily suppressed, and the effect of improving charge-discharge cycle characteristics is enhanced. When an Al₂O₃ phase is present, a peak derived from the Al₂O₃ phase can be observed around 2θ = 25.4° in an X-ray diffraction pattern of the composite particle obtained by X-ray diffraction measurement. The content of Al₂O₃ in the composite particle 11 is, for example, 10 mass% or less.

The silicon phase 14 is a phase of elemental Si, and repeatedly occludes and releases Li ions as the battery is charged and discharged. A capacity is exhibited by a Faraday reaction involving the silicon phase 14. The silicon phase 14 has a large capacity. Furthermore, the silicon phase 14 undergoes a large degree of expansion and contraction during charge and discharge. In the negative electrode active material of the present disclosure, since the silicon phase 14 is dispersed in the ion-conducting phase 13, the stress caused by expansion and contraction of the silicon phase 14 is alleviated by the ion-conducting phase 13.

The silicon phase 14 may be in the form of particles. The silicon phase 14 is, for example, in the form of particles at least before the first charge. The average particle diameter of the silicon phase 14 may be 1 nm or more and 1000 nm or less. The average particle diameter of the silicon phase 14 may be 500 nm or less, 200 nm or less, or 50 nm or less. After the first charge, the average particle diameter of the silicon phase 14 may be 400 nm or less, or 100 nm or less. By dispersing the fine silicon phase 14 in the ion-conducting phase 13 as described above, the change in the volume of the composite particle during charge and discharge is reduced, and the structural stability of the negative electrode active material is further improved.

The average particle diameter of the silicon phase 14 can be measured using an SEM image obtained by observing a cross-section of the negative electrode active material 10 in which a cross-section of the silicon phase 14 is exposed, with an SEM. Specifically, the average particle diameter of the silicon phase 14 is determined by averaging the maximum diameters of 100 silicon phases 14 arbitrarily selected from the cross-sectional SEM image of the negative electrode active material 10.

The silicon phase 14 may contain crystalline silicon. The silicon phase 14 is composed of, for example, a plurality of crystallites. The crystallite size of the silicon phase 14 may be 30 nm or less, 20 nm or less, or 15 nm or less. As a result, change in volume due to expansion and contraction of the silicon phase 14 during charge and discharge can be reduced, and the effect of improving charge-discharge cycle characteristics becomes more remarkable. The crystallite size of the silicon phase 14 is calculated using the Scherrer equation from the full width at half maximum of a diffraction peak derived from the Si(111) plane in an X-ray diffraction pattern obtained by X-ray diffraction measurement using Cu-Kα rays.

The lower limit value of the crystallite size of the silicon phase 14 is not particularly limited, and is, for example, 1 nm. An example of a suitable crystallite size of the silicon phase 14 is 1 nm or more and 15 nm or less and may be 5 nm or more and 11 nm or less. When the crystallite size of the silicon phase 14 is 1 nm or more, for example, the surface area of the silicon phase 14 can be reduced to be small, and therefore deterioration of the silicon phase 14 which is accompanied by the generation of irreversible capacity is less likely to occur. When the crystallite size is 15 nm or less, the expansion and contraction of the silicon phase 14 are easily made uniform, and the stress generated in the negative electrode active material is effectively alleviated.

When the ion-conducting phase 13 includes a carbon phase, from the viewpoint of increasing capacity and improving charge-discharge cycle characteristics, the content rate of the silicon phase 14 in the composite particle 11 may be 30 mass% or more and 80 mass% or less, or 40 mass% or more and 70 mass% or less.

When the ion-conducting phase 13 includes a lithium silicate phase, from the viewpoint of increasing capacity and improving charge-discharge cycle characteristics, the content rate of the silicon phase 14 in the composite particle 11 may be 30 mass% or more and 90 mass% or less, or 30 mass% or more and 75 mass% or less.

When the ion-conducting phase 13 includes a lithium aluminate phase, from the viewpoint of increasing capacity, the content rate of the silicon phase 14 in the composite particle 11 may be 30 mass% or more, 35 mass% or more, or 55 mass% or more. From the viewpoint of improving charge-discharge cycle characteristics, the content rate of the silicon phase 14 in the composite particle may be 95 mass% or less, 75 mass% or less, or 70 mass% or less. In this case, the silicon phase 14 exposed on the surface of the composite particle 11 without being covered with the lithium aluminate phase is reduced, and side reactions between the electrolyte and the silicon phase 14 are also suppressed. The content rate of the silicon phase 14 in the composite particle 11 may be 30 mass% or more and 90 mass% or less, or 35 mass% or more and 75 mass% or less.

The content rate of the silicon phase 14 in the composite particle 11 is determined by quantifying the amount of Si constituting the silicon phase 14 in the composite particle 11 using Si-NMR, as will be described later.

The composite particle 11 may further include a conductive layer (not shown) covering at least a part of the surface of a particle composed of the ion-conducting phase 13 and the silicon phase 14. This conductive layer is located between the coating layer 12 and the particle composed of the ion-conducting phase 13 and the silicon phase 14. Hereinafter, the particle composed of the ion-conducting phase 13 and the silicon phase 14 is referred to as "base particle". That is, the conductive layer covers at least a part of the surface of the base particle. With the above configuration, the electrical conductivity of the composite particle 11 is improved.

The conductive layer may cover the entire surface of the base particle. The conductive layer is, for example, a thin film layer containing a conductive material. Since the composite particle 11 includes the conductive layer, the electrical conductivity is improved.

The conductive material may be a conductive carbon material. That is, the conductive layer may contain carbon. As the carbon material, graphites such as natural graphite, artificial graphite, and graphitized mesophase carbon, amorphous carbon, soft carbon, hard carbon, and the like can be used. The carbon material may be amorphous carbon. According to the above, it is easy to form a thin conductive layer covering the surface of the base particle. Examples of the amorphous carbon include carbon black, calcined pitch, cokes, and activated carbon.

The thickness of the conductive layer is desirably small so as not to affect the average particle diameter of the composite particle 11. The thickness of the conductive layer may be 1 nm or more and 200 nm or less, or 5 nm or more and 100 nm or less, in consideration of ensuring electrical conductivity and the diffusibility of ions such as Li ions. The thickness of the conductive layer can be measured by observing a cross-section of the negative electrode active material in which a cross-section of the composite particle 11 is exposed, with an SEM or a TEM.

The porosity of the composite particle 11 before the first charge and discharge may be 25% or less. Since the conductive layer does not affect the porosity, the porosity of the composite particle 11 and the porosity of the base particle are substantially the same. By reducing the porosity of the composite particle 11 to 25% or less, the number of portions that can become starting points of cracks and fractures when charge and discharge are repeated is reduced. Accordingly, deterioration of the negative electrode active material is suppressed, and the charge-discharge cycle characteristics of the battery are further improved. The porosity of the composite particle 11 may be 20% or less, or may be 15% or less. The lower limit value of the porosity is not particularly limited, but is 1% as an example.

The porosity of the composite particle 11 means the proportion of voids in a cross-section of the composite particle 11. The porosity of the composite particle 11 can be measured using an SEM image of a cross-section of the negative electrode active material in which a cross-section of the composite particle 11 is exposed. The porosity of the composite particle 11 is calculated by extracting the regions of the voids by binarizing the SEM image using image analysis software (e.g., imageJ), and dividing the total area of the voids by the total area of the particle cross-section.

The porosity of the composite particle 11 can be controlled to some extent, for example, by adjusting the calcining temperature in a production process of the composite particle 11, the compressive force applied to particles during calcination, etc.

The composite particle 11 may have a Vickers hardness of 300 HV or more. Since the conductive layer does not affect the Vickers hardness, the Vickers hardness of the composite particle 11 and the Vickers hardness of the base particle are substantially the same. When the composite particle 11 has a high Vickers hardness, change in the volume of the silicon phase 14 during charge and discharge is easily suppressed, and thus deterioration of the particle structure can be reduced. As a result, the effect of improving charge-discharge cycle characteristics becomes more remarkable. The Vickers hardness of the composite particle 11 is more preferably 350 HV or more and may be 400 HV or more, or 500 HV or more.

The Vickers hardness of the composite particle 11 can be measured using a Vickers hardness tester. Specifically, the composite particle 11 in which the coating layer 12 has been removed from the negative electrode active material is embedded into a thermosetting resin, and polished with sandpaper No. 400 to expose a cross-section of the composite particle 11. The cross-section is further mirror-finished by polishing with sandpaper No. 2000 and buffing. The Vickers hardness is measured under the conditions of a load of 1 kg and a holding time of 15 seconds. The upper limit value of the Vickers hardness of the composite particle 11 is not particularly limited, but is, for example, 1500 HV.

The content of each element in the composite particle 11 is measured by the following method. The oxygen content can be measured using an oxygen/nitrogen/hydrogen analyzer. The Si content can be measured using NMR. The carbon content can be measured using a carbon/sulfur analyzer. The contents of other elements can be measured by inductively coupled plasma atomic emission spectrometry. If such a content cannot be measured by inductively coupled plasma atomic emission spectrometry (ICP), the measurement can also be performed using energy dispersive X-ray (EDX). If such a content cannot be measured by any of ICP and EDX, the measurement can also be performed using Auger electron spectrometry (AES). The composition of the ion-conducting phase 13 can be determined from the content of each element. When measurement is performed from the state of the battery, for example, the battery in a fully discharged state is disassembled, a negative electrode is taken out, washed to remove the non-aqueous electrolyte component, and is dried, and then a cross-section of a negative electrode mixture layer obtained using a cross-section polisher is analyzed, whereby the measurement can be performed.

### <Inductively Coupled Plasma Atomic Emission Spectrometry (ICP)>

A sample of the composite particle 11 is completely dissolved in a heated acid solution (mixed acid of hydrofluoric acid, nitric acid, and sulfuric acid), and carbon residue in the solution is removed by filtration. Then, the obtained filtrate is analyzed by ICP to measure the spectral intensity of each element. Next, a calibration curve is prepared using commercially available standard solutions of the elements, and the content of each element included in the composite particle 11 is calculated.

### <Energy Dispersive X-ray (EDX)>

If the measurement cannot be performed by ICP, the measurement is performed by EDX. From a backscattered electron image of a cross-section of the negative electrode active material in which a cross-section of the composite particle 11 is exposed, elemental mapping analysis is performed by EDX. Content areas of the target elements are calculated using image analysis software. The observation magnification is, for example, 2000 to 20000 times. When measurement is performed from the state of a battery, 10 composite particles 11 having a maximum particle diameter of 5 µm or more are randomly selected from a cross-sectional image of a backscattered electron image of the negative electrode mixture layer including the negative electrode active material, and elemental mapping analysis is performed on each of the composite particles 11 by EDX. The measured values of the content area of a predetermined element included in the 10 particles are averaged to calculate the content of the target element.

Desired measurement conditions of the cross-sectional SEM-EDX analysis are described below.
Processing apparatus: SM-09010 (Cross Section Polisher), manufactured by JEOL Ltd.
Processing condition: acceleration voltage 6 kV
Current value: 140 µA
Vacuum degree: 1×10⁻³ Pa to 2×10⁻³ Pa
Measurement apparatus: electron microscope SU-70, manufactured by Hitachi, Ltd.
Acceleration voltage during analysis: 10 kV
Field: free mode
Probe current mode: Medium
Probe current range: High
Anode Ap.: 3
OBJ Ap.: 2
Analysis area: 1-µm square
Analysis software: EDAX Genesis
CPS: 20500
Lsec: 50
Time constant: 3.2

### <Auger Electron Spectrometry (AES)>

If the measurement cannot be performed by any of ICP and EDX, the measurement is performed by AES. From a backscattered electron image of a cross-section of the negative electrode active material in which a cross-section of the composite particle 11 is exposed, qualitative and quantitative analysis of elements is performed using an AES analyzer (for example, JAMP-9510F, manufactured by JEOL Ltd.). The measurement conditions may be, for example, an acceleration voltage of 10 kV, a beam current of 10 nA, and an analysis region of 20 µmΦ. When measurement is performed from the state of a battery, 10 composite particles 11 having a maximum particle diameter of 5 µm or more are randomly selected from a cross-sectional image of a backscattered electron image of the negative electrode mixture layer including the negative electrode active material, and qualitative and quantitative analysis of elements is performed on each of the composite particles 11 using the AES analyzer. The contents of a predetermined element included in 10 particles are averaged to calculate the content.

In the process of charge/discharge, a coating can be formed on the surface of the composite particle 11 due to decomposition of a non-aqueous electrolyte, etc. As described above, the composite particle may further include a conductive layer. Therefore, the EDX analysis and AES analysis are performed on a range, for example, 1 µm inward from the peripheral edge of the cross-section of the composite particle such that the thin coating and conductive layer are not included in the measurement range.

### <Inert Gas Fusion - Non-Dispersive Infrared Absorption Method>

The content of oxygen included in the composite particle 11 can be measured using an oxygen/nitrogen/hydrogen analyzer (for example, EGMA-830 model, manufactured by HORIBA, Ltd.). The sample is placed in a Ni capsule, the Ni capsule is then placed in a carbon crucible heated with an electric power of 5.75 kW together with Sn pellets and Ni pellets that serve as a flux, and released carbon monoxide gas is detected. A calibration curve is prepared using a standard sample of Y₂O₃, and the oxygen content of the sample is calculated.

### <Nuclear Magnetic Resonance Spectroscopy (NMR)>

The amount of Si constituting the silicon phase 14 can be quantified using Si-NMR. Desired measurement conditions of the Si-NMR are described below.
Measurement apparatus: solid nuclear magnetic resonance spectrum measurement apparatus (INOVA-400), manufactured by VARIAN, Inc.
Probe: Varian 7 mm CPMAS-2
MAS: 4.2 kHz
MAS speed: 4 kHz
Pulse: DD (45°-pulse+signal capturing time 1H decoupling)
Repetition time: 1200 sec to 3000 sec
Observation width: 100 kHz
Observation center: around -100 ppm
Signal capturing time: 0.05 sec
Number of scans: 560
Sample amount: 207.6 mg

### <High-Frequency Induction Heating Furnace Burning - Infrared Absorption Method>

The content of carbon contained in the composite particle 11 can be measured using a carbon/sulfur analyzer (for example, EMIA-520 model manufactured by HORIBA, Ltd.). The sample is weighed on a magnetic board, a burning auxiliary is added, the sample is inserted into a burning furnace (carrier gas: oxygen) heated to 1350°C, and the amount of carbon dioxide gas generated during burning is detected by infrared absorption. A calibration curve is prepared using, for example, carbon steel (carbon content: 0.49%) manufactured by the Bureau of Analysed Samples Ltd., and the carbon content of the sample is calculated.

### (Method for Producing Negative Electrode Active Material)

The negative electrode active material of the present disclosure is produced, for example, by a production method including a step I of obtaining the silicon-containing particles 11 and a step II of forming the coating layer 12 on the surfaces of the silicon-containing particles 11.

### [Step I]

When each silicon-containing particle 11 is the composite particle 11 described above, the composite particle 11 is produced, for example, as follows.

When the ion-conducting phase 13 is a carbon phase, the composite particle 11 is obtained, for example, by crushing and fining a mixture of a carbon source and raw material silicon while stirring with a ball mill or the like, then performing heat treatment on the mixture in an inert atmosphere, and crushing a sintered product obtained by the heat treatment. As the carbon source, for example, sugars such as carboxymethyl cellulose (CMC) and water-soluble resins such as polyvinylpyrrolidone are used.

When the ion-conducting phase 13 is a lithium silicate phase, the composite particles 11 can be produced, for example, by the following steps (iA) and (iiA).

### Step (iA) (Step of Obtaining Lithium Silicate)

As the raw material for lithium silicate, a raw material mixture containing a Si raw material and a Li raw material at a predetermined ratio is used. The raw material mixture may contain another element M1 if necessary. The mixture obtained by mixing the above raw materials in predetermined amounts is melted, and the molten liquid is passed through a metal roll to form flakes, thereby producing lithium silicate. Then, the flaked silicate is crystallized by heat treatment in an air atmosphere at a temperature equal to or higher than the glass transition point and equal to or lower than the melting point. It is also possible to use the flaked silicate without crystallizing the silicate. It is also possible to produce a silicate by calcining the mixture, mixed in a predetermined amount, at a temperature equal to or lower than the melting point through a solid-state reaction, without melting the mixture.

As the Si raw material, silicon oxide can be used. As the Li raw material, for example, lithium carbonate, lithium oxide, lithium hydroxide, lithium hydride, etc., can be used. One of these materials may be used alone, or two or more of these materials may be used in combination. Examples of the raw material for the element M1 include oxides, hydroxides, carbonate compounds, hydrides, nitrates, sulfates, and the like of each element. Within the lithium silicate, the Si raw material that has not reacted with the Li raw material may remain. The remaining Si raw material is dispersed in the lithium silicate as fine crystals of silicon oxide.

### Step (iiA) (Step of Obtaining Composite Particle Including Lithium Silicate Phase)

Next, raw material silicon is blended into the lithium silicate to form a composite. For example, composite particles are produced through the following steps (iiA-a) to (iiA-c).

### Step (iiA-a)

First, a powder of the raw material silicon and a powder of the lithium silicate are mixed at a mass ratio of, for example, 20:80 to 95:5. Coarse silicon particles having an average particle diameter of several micrometers to several tens of micrometers may be used as the raw material silicon.

### Step (iiA-b)

Next, using a crushing device such as a ball mill, the mixture of the raw material silicon and the lithium silicate is crushed and formed into a composite while being fined. At this time, an organic solvent may be added to the mixture and wet crushing may be performed. A predetermined amount of the organic solvent may be added all at once to a crushing container at the beginning of crushing, or the predetermined amount of the organic solvent may be intermittently added to the crushing container multiple times during the crushing process. The organic solvent serves the role of preventing adhesion of the material to be crushed to the inner wall of the crushing container.

As the organic solvent, alcohols, ethers, fatty acids, alkanes, cycloalkanes, silicate esters, metal alkoxides, etc., can be used.

As the raw material silicon, coarse silicon particles having an average particle diameter of several micrometers to several tens of micrometers may be used. It is preferable to control the finally obtained silicon particles such that a crystallite size calculated by the Scherrer equation from the full width at half maximum of a diffraction peak attributed to the Si(111) plane in an X-ray diffraction pattern is 5 nm or more and 50 nm or less.

The raw material silicon and the lithium silicate may be fined separately before mixing. Alternatively, silicon nanoparticles and amorphous lithium silicate nanoparticles may be produced and mixed together without using a crushing device. For the production of nanoparticles, a known method such as a vapor phase method (e.g., plasma method) or a liquid phase method (e.g., liquid phase reduction method) may be used.

### Step (iiA-c)

Next, the crushed material is calcined while applying pressure by a hot press or the like to obtain a sintered product. The calcination is performed, for example, in an inert atmosphere (for example, an atmosphere of argon, nitrogen, or the like). The calcining temperature is preferably 450°C or higher and 1000°C or lower. In the above temperature range, it is easier to disperse fine silicon particles in the silicate phase, which has low crystallinity. During sintering, the lithium silicate softens and flows so as to fill the gaps between the silicon particles. As a result, a dense block-like sintered product having a silicate phase as a sea part and the silicon particles as island parts can be obtained. The calcining temperature is preferably 550°C or higher and 900°C or lower, and more preferably 650°C or higher and 850°C or lower. The calcining time is, for example, 1 hour or longer and 10 hours or shorter.

By crushing the obtained sintered product, composite particles 11 including a lithium silicate phase are obtained. By appropriately selecting the crushing conditions, composite particles 11 having a predetermined average particle diameter can be obtained. By the step (iA) and the step (iiA), composite particles 11 having a lithium silicate phase as a matrix and a silicon phase dispersed in the matrix are obtained.

When the ion-conducting phase 13 is a lithium aluminate phase, the composite particles 11 can be produced, for example, by the following steps (iB) and (iiB).

### Step (iB) (Step of Obtaining Lithium Aluminate)

The lithium aluminate includes, for example, a step of mixing an Al raw material, a Li raw material, and, if necessary, a compound containing the element M2 to obtain a mixture, and a step of calcining the mixture to obtain lithium aluminate. The calcination is performed in an oxidative atmosphere, for example. The calcining temperature may be 400°C or higher and 1200°C or lower, or may be 700°C or higher and 1100°C or lower.

Examples of the Al raw material include aluminum oxide, aluminum hydroxide, and aluminum carbonate. One of these Al raw materials may be used alone, or two or more of these Al raw materials may be used in combination.

Examples of the Li raw material include lithium carbonate, lithium oxide, lithium hydroxide, and lithium hydride. One of these Li raw materials may be used alone, or two or more of these Li raw materials may be used in combination.

Examples of the raw material for the element M2 include oxides, hydroxides, carbonate compounds, hydrides, nitrates, sulfates, and the like of each element. One of these raw materials for the element M2 may be used alone, or two or more of these raw materials for the element M2 may be used in combination.

The Al raw material that has not reacted with the Li raw material in the process of producing lithium aluminate may remain in the lithium aluminate. If the amount of the Al raw material to be used relative to the Li raw material is large, an Al compound tends to remain. When the Al compound remaining in the lithium aluminate is Al₂O₃, an Al₂O₃ phase dispersed in the lithium aluminate phase can be formed in the finally obtained composite particles.

Step (iiB) (Step of Obtaining Composite Particles Including Lithium Aluminate Phase)

Next, the raw material silicon is blended into the lithium aluminate to form a composite. For example, composite particles are produced through the following steps (iiB-a) to (iiB-c).

### Step (iiB-a)

First, a powder of the raw material silicon and a powder of the lithium aluminate are mixed at a mass ratio of, for example, 20:80 to 95:5. Coarse silicon particles having an average particle diameter of several micrometers to several tens of micrometers may be used as the raw material silicon.

### Step (iiB-b)

Next, using a crushing device such as a ball mill, the mixture of the raw material silicon and the lithium aluminate is crushed and formed into a composite while being fined. At this time, an organic solvent may be added to the mixture and wet crushing may be performed. A predetermined amount of the organic solvent may be added all at once to a crushing container at the beginning of crushing, or the predetermined amount of the organic solvent may be intermittently added to the crushing container multiple times during the crushing process. The organic solvent serves the role of preventing adhesion of the material to be crushed to the inner wall of the crushing container.

As the organic solvent, alcohols, ethers, fatty acids, alkanes, cycloalkanes, silicate esters, metal alkoxides, etc., can be used.

As the raw material silicon, coarse silicon particles having an average particle diameter of several micrometers to several tens of micrometers may be used. It is preferable to control the finally obtained silicon particles such that a crystallite size calculated by the Scherrer equation from the full width at half maximum of a diffraction peak attributed to the Si(111) plane in an X-ray diffraction pattern is 5 nm or more and 50 nm or less.

The raw material silicon and the lithium aluminate may be fined separately before mixing. Alternatively, silicon nanoparticles and amorphous lithium silicate nanoparticles may be produced and mixed together without using a crushing device. For the production of nanoparticles, a known method such as a vapor phase method (e.g., plasma method) or a liquid phase method (e.g., liquid phase reduction method) may be used.

### Step (iiB-c)

Next, the crushed material is calcined while applying pressure by a hot press or the like to obtain a sintered product. The calcination is performed, for example, in an inert atmosphere (for example, an atmosphere of argon, nitrogen, or the like). The calcining temperature is preferably 450°C or higher and 1000°C or lower. In the above temperature range, it is easier to disperse fine silicon particles in the silicate phase, which has low crystallinity. During sintering, the lithium aluminate softens and flows so as to fill the gaps between the silicon particles. As a result, a dense block-like sintered product having a lithium aluminate phase as a sea part and the silicon particles as island parts can be obtained. The calcining temperature is preferably 550°C or higher and 950°C or lower, and more preferably 650°C or higher and 900°C or lower. The calcining time is, for example, 1 hour or longer and 10 hours or shorter.

By crushing the obtained sintered product, composite particles 11 including a lithium aluminate phase are obtained. By appropriately selecting the crushing conditions, composite particles 11 having a predetermined average particle diameter can be obtained. By the step (iB) and the step (iiB), composite particles 11 having a lithium aluminate phase as a matrix and a silicon phase dispersed in the matrix are obtained.

When the composite particles 11 each have the above-described conductive layer, the conductive material constituting the conductive layer is desirably a conductive carbon material as described above. Examples of a method for covering the surfaces of the base particles with the carbon material include: a CVD method using a hydrocarbon gas such as acetylene and methane as a raw material; and a method of mixing coal pitch, petroleum pitch, phenol resin, or the like with the base particles and heating and carbonizing the mixture. Alternatively, carbon black may be adhered to the base particles. For example, a mixture of the base particles and the carbon material is heated at 700°C or higher and 950°C or lower in an inert atmosphere (for example, an atmosphere of argon, nitrogen, or the like) to form a conductive layer 4 on the surfaces of the base particles. Thus, the composite particles 11 each having the conductive layer on the surface of the base particle are obtained.

### [Step II]

The step II is a step of forming the coating layer 12 on the surfaces of the composite particles 11.

For example, after granulating the composite particles 11, the boron-containing compound, and the fluorine-containing hydrophobic polymer, the granulated powder is crushed and classified to a desired size, thereby obtaining a negative electrode active material having a desired average particle diameter and having the coating layer 12 formed on the surfaces of the composite particles 11.

The granulation is performed, for example, by dispersing the composite particles 11, a powder of the boron-containing compound, and the fluorine-containing hydrophobic polymer in water, and then spray-drying the dispersion liquid. Accordingly, the coating layer 12, which is a mixed layer of the boron-containing compound and the fluorine-containing hydrophobic polymer, is formed on the surfaces of the composite particles 11.

The addition amount of the boron-containing compound may be 1 mass% or more and 6 mass% or less with respect to the composite particles 11. The addition amount of the fluorine-containing hydrophobic polymer may be 1 mass% or more and 6 mass% or less with respect to the composite particles 11.

It is desirable that the particle diameters of the boron-containing compound and the fluorine-containing hydrophobic polymer to be dispersed in water are each smaller than the particle diameter of the composite particles 11. In this case, it is easy to uniformly cover the surfaces of the composite particles 11 with the boron-containing compound and the hydrophobic polymer. The average particle diameter of the boron-containing compound may be 1 µm or more and 100 µm or less, or 1 µm or more and 10 µm or less. The average particle diameter of the fluorine-containing hydrophobic polymer may be 200 nm or more and 1 µm or less.

The method for forming the coating layer 12 on the surfaces of the composite particles 11 is not limited to the above. For example, the composite particles, a powder of the boron-containing compound, and a powder of the fluorine-containing hydrophobic polymer may be dry-mixed to obtain a mixture, and then the mixture may be subjected to heat treatment to form the coating layer 12 on the surfaces of the composite particles 11.

By the mixing treatment, an intermediate (mixture) in which a mixture of the boron-containing compound and the fluorine-containing hydrophobic polymer is adhered to the surfaces of the composite particles 11 is obtained. A ball mill method can be used for the dry-mixing treatment. The addition amounts and the particle diameters of the boron-containing compound and the fluorine-containing hydrophobic polymer may be the same as those described above.

The heat treatment is desirably performed at a temperature equal to or higher than the melting point of the fluorine-containing hydrophobic polymer and equal to or lower than the decomposition temperature of the fluorine-containing hydrophobic polymer. When PVDF is used as the fluorine-containing hydrophobic polymer, the heat treatment temperature may be equal to or higher than the melting point (150°C to 170°C) of PVDF and equal to or lower than the decomposition temperature (340°C) of PVDF, and is desirably, for example, 200°C or higher and 250°C or lower. The heat treatment may be performed in an inert atmosphere. The heat treatment time is, for example, about 1 hour to 3 hours. The fluorine-containing hydrophobic polymer in the mixture is liquefied by the heat treatment, and penetrates and diffuses around the composite particles 11 and the particles of the boron-containing compound so as to fill the gaps between the composite particles 11 and the particles of the boron-containing compound and the gaps between the particles of the boron-containing compound. Accordingly, the retention of the boron-containing compound on the surfaces of the composite particles 11 is enhanced. Thus, the coating layer 12, which is a mixed layer of the boron-containing compound and the fluorine-containing hydrophobic polymer, is formed. The mixture after the heat treatment is crushed to obtain a negative electrode active material having a desired average particle diameter.

### (Embodiment 2)

A battery according to Embodiment 2 includes a positive electrode, a negative electrode, and an electrolyte. The negative electrode contains the negative electrode active material according to Embodiment 1. Owing to this configuration, the battery according to Embodiment 2 can suppress a decrease in initial charge-discharge efficiency while also suppressing an increase in internal resistance.

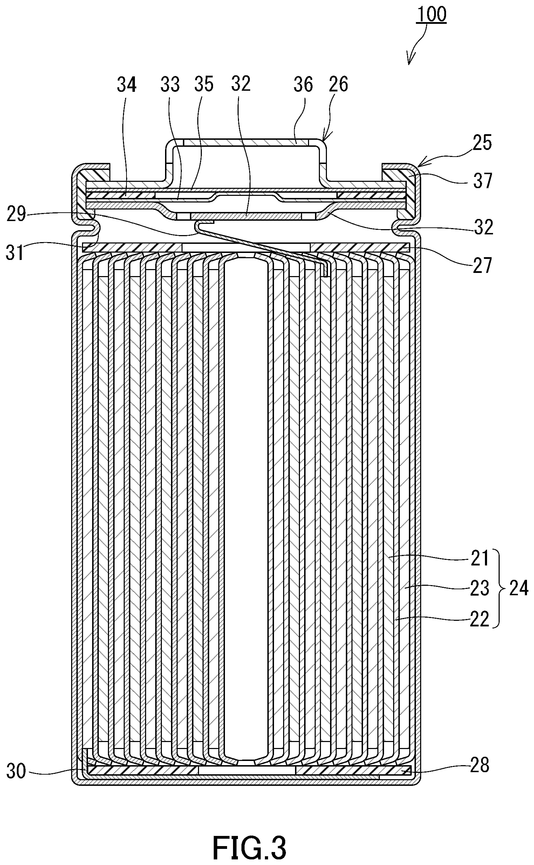

FIG. 3 is a vertical cross-sectional view schematically showing an example of the battery according to Embodiment 2. A battery 100 is a cylindrical battery including a cylindrical battery case, a wound electrode group 24, and an electrolyte solution which is not shown. The electrode group 24 is housed in the battery case and is in contact with the electrolyte solution.

The battery case is composed of a case body 25 which is a cylindrical metal container with a bottom, and a sealing body 26 which seals the opening of the case body 25. A gasket 37 is placed between the case body 25 and the sealing body 26. The airtightness of the battery case is ensured by the gasket 37. In the case body 25, insulating plates 27 and 28 are respectively placed at both ends of the electrode group 24 in the direction of the winding axis of the electrode group 24.

The case body 25 has, for example, a step portion 31. The step portion 31 can be formed by partially pressing the side wall of the case body 25 from the outside. The step portion 31 may be formed on the side wall of the case body 25 in an annular shape along the circumferential direction of an imaginary circle defined by the case body 25. At this time, the sealing body 26 is supported by, for example, the surface of the step portion 31 on the opening side.

The sealing body 26 includes a filter 32, a lower valve body 33, an insulating member 34, an upper valve body 35, and a cap 36. In the sealing body 26, these members are stacked in this order. The sealing body 26 is attached to the opening of the case body 25 such that the cap 36 is located outside the case body 25 and the filter 32 is located inside the case body 25.

Each of the above members constituting the sealing body 26 has, for example, a disk shape or a ring shape. The above members, except for the insulating member 34, are electrically connected to each other.

The electrode group 24 has a positive electrode 21, a separator 22, and a negative electrode 23. The positive electrode 21, the separator 22, and the negative electrode 23 are all strip-shaped. The width direction of the strip-shaped positive electrode 21 and negative electrode 23 is, for example, parallel to the winding axis of the electrode group 24. The separator 22 is placed between the positive electrode 21 and the negative electrode 23. The positive electrode 21 and the negative electrode 23 are spirally wound with the separator 22 interposed between these electrodes.

When a cross-section of the battery 100 in a direction perpendicular to the winding axis of the electrode group 24 is observed, the positive electrode 21 and the negative electrode 23 are stacked alternately in the radial direction of the imaginary circle defined by the case body 25, with the separator 22 interposed between these electrodes.

The positive electrode 21 is electrically connected via a positive electrode lead 29 to the cap 36 which also serves as a positive electrode terminal. One end of the positive electrode lead 29 is connected to, for example, the vicinity of the center of the positive electrode 21 in the longitudinal direction of the positive electrode 21. The positive electrode lead 29 extends from the positive electrode 21 to the filter 32 through a through hole formed in the insulating plate 27. The other end of the positive electrode lead 29 is welded to, for example, the surface of the filter 32 on the electrode group 24 side.

The negative electrode 23 is electrically connected via a negative electrode lead 30 to the case body 25 which also serves as a negative electrode terminal. One end of the negative electrode lead 30 is connected to, for example, an end portion of the negative electrode 23 in the longitudinal direction of the negative electrode 23. The other end of the negative electrode lead 30 is welded to, for example, the inner bottom surface of the case body 25.

Each component of the battery 100 will be specifically described below.

The positive electrode 21 contains a material that has the property of occluding and releasing metal ions (for example, lithium ions). The positive electrode 21 contains, for example, a positive electrode active material. The positive electrode 21 includes, for example, a positive electrode current collector and a positive electrode mixture layer supported on the surface of the positive electrode current collector.

As the positive electrode current collector, for example, a sheet or film made of a metal material such as aluminum, stainless steel, titanium, and alloys thereof can be used. Aluminum and alloys thereof are suitable as materials for positive electrode current collectors since these materials are inexpensive and easily made into thin films. The sheet or film may be porous or non-porous. As the sheet or film, a metal foil, a metal mesh, or the like is used. A carbon material such as carbon may be applied as a conductive auxiliary material to the surface of the positive electrode current collector.

The positive electrode mixture layer contains a positive electrode active material. The positive electrode active material may be a material having the ability to occlude and release metal ions (for example, lithium ions). As the positive electrode active material, lithium-containing transition metal oxides, lithium-containing transition metal phosphates, transition metal fluorides, polyanionic materials, fluorinated polyanionic materials, transition metal sulfides, transition metal oxysulfides, transition metal oxynitrides, etc., can be used. In particular, when a lithium-containing transition metal oxide or a lithium-containing transition metal phosphate is used as the positive electrode active material, the production cost of the battery can be reduced and the average discharge voltage can be increased. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate.

The positive electrode mixture layer may further contain a binder. Examples of the binder include fluorine-containing resins such as PVDF, polyacrylonitrile (PAN), polyimide, acrylic resin, polyolefin, and SBR. Additionally, these resins may be used in combination with carboxymethyl cellulose (CMC) or a salt thereof, polyacrylic acid (PAA) or a salt thereof, polyvinyl alcohol (PVA), and the like.

The positive electrode mixture layer may further contain a conductive additive. Examples of the conductive additive include carbon materials and conductive polymer compounds. Examples of carbon materials include carbon black, graphite, acetylene black, carbon nanotubes, carbon nanofibers, graphene, fullerene, and graphite oxide. Examples of conductive polymer compounds include polyaniline, polypyrrole, and polythiophene.

The negative electrode 23 contains a material that has the property of occluding and releasing metal ions (for example, lithium ions). The negative electrode 23 is a negative electrode that contains the negative electrode active material 10 according to Embodiment 1. The negative electrode 23 includes, for example, a negative electrode current collector and a negative electrode mixture layer supported on the surface of the negative electrode current collector.

The negative electrode current collector is, for example, a foil made of a metal material such as stainless steel, nickel, a nickel alloy, copper, or a copper alloy.

The negative electrode mixture layer contains the negative electrode active material 10 according to Embodiment 1. The negative electrode mixture layer may contain other materials such as a binder and a conductive additive, if necessary. As the binder and the conductive additive, the materials described above for the positive electrode mixture layer can also be used for the negative electrode mixture layer.

The electrolyte solution used as the electrolyte may contain a non-aqueous solvent and a lithium salt dissolved in the non-aqueous solvent. The concentration of the lithium salt in the electrolyte solution may be, for example, 0.5 mol/liter or more and 2 mol/liter or less. By controlling the lithium salt concentration within the above range, an electrolyte solution having excellent ionic conductivity and an appropriate viscosity can be obtained. However, the lithium salt concentration is not limited to the above.

As the non-aqueous solvent, cyclic carbonates, chain carbonates, cyclic ethers, chain ethers, nitriles, amides, etc., can be used. One solvent selected from these solvents may be used, or two or more of these solvents may be used in combination.

As the lithium salt, lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bisperfluoroethylsulfonylimide (LiN(SO₂C₂F₅)₂), LiAsF₆, LiCF₃SO₃, lithium difluoro(oxalato)borate, etc., can be used. One electrolyte salt selected from these electrolyte salts may be used, or two or more of these electrolyte salts may be used in combination.

Usually, it is desirable to interpose a separator between a positive electrode and a negative electrode. The separator 22 has a high ion permeability and has appropriate mechanical strength and insulating properties. As the separator 22, a microporous thin film, a woven fabric, a nonwoven fabric, or the like can be used. As the material of the separator 22, for example, a polymer can be used. The polymer may be a polyolefin such as polypropylene and polyethylene.

In the battery according to Embodiment 2, for example, a polymer provided as a separator may be impregnated with the electrolyte solution. That is, the battery according to Embodiment 2 may have a structure in which an electrolyte solution and a polymer are used in combination.

The battery according to Embodiment 2 may further include a solid electrolyte as the electrolyte. That is, the battery of the present disclosure may have a hybrid structure in which an electrolyte solution and a solid electrolyte are used in combination. Examples of solid electrolyte materials are halide solid electrolytes, sulfide solid electrolytes, oxide solid electrolytes, or organic polymer solid electrolytes. In the present disclosure, the term "halide solid electrolyte" refers to a solid electrolyte containing a halogen element as a main component of anions. The term "sulfide solid electrolyte" refers to a solid electrolyte containing sulfur as a main component of anions. The term "oxide solid electrolyte" refers to a solid electrolyte containing oxygen as a main component of anions. The main component of the anions means an anion with the largest amount of substance among all the anions constituting the solid electrolyte.

As an example of the structure of the battery according to Embodiment 2, the configuration example shown in FIG. 3, that is, a cylindrical non-aqueous electrolyte secondary battery in which a wound electrode group formed by winding a positive electrode and a negative electrode with a separator interposed therebetween and an electrolyte solution are housed in an exterior body, is described. However, the battery according to the present disclosure is not limited to this configuration example. The battery according to Embodiment 2 may be in any form, such as a prismatic type, a coin type, a button type, or a laminated type. Furthermore, as the electrode group in the battery according to Embodiment 2, an electrode group of another form, such as an electrode group in which a positive electrode and a negative electrode are stacked with a separator interposed therebetween, may be used instead of a wound electrode group.

### (Other Embodiments)

### (Additional Notes)

The following techniques are disclosed by the description of the above embodiments.

### (Technique 1)

A negative electrode active material including:
a silicon-containing particle; and
a coating layer covering at least a part of a surface of the silicon-containing particle, wherein
the coating layer contains a boron-containing compound and a fluorine-containing hydrophobic polymer.

Owing to this configuration, the negative electrode active material according to Technique 1 can suppress a decrease in battery characteristics caused by the provision of a coating layer, specifically suppress a decrease in the initial charge-discharge efficiency of a battery, while also suppressing an increase in the internal resistance of the battery.

### (Technique 2)

The negative electrode active material according to Technique 1, wherein the boron-containing compound includes at least one selected from the group consisting of H₃BO₃, Li₂B₄O₇, LiBO₂, Na₂B₄O₇, NaBO₂, K₂B₄O₇, KBO₂, hydrates of H₃BO₃, hydrates of Li₂B₄O₇, hydrates of LiBO₂, hydrates of Na₂B₄O₇, hydrates of NaBO₂, hydrates of K₂B₄O₇, and hydrates of KBO₂.

Owing to this configuration, the negative electrode active material according to Technique 2 can more effectively suppress a decrease in the initial charge-discharge efficiency of the battery while also suppressing an increase in the internal resistance of the battery.

### (Technique 3)

The negative electrode active material according to Technique 1 or 2, wherein the boron-containing compound contains lithium.

Owing to this configuration, the negative electrode active material according to Technique 3 can improve the charge-discharge cycle characteristics of the battery.

### (Technique 4)

The negative electrode active material according to any one of Techniques 1 to 3, wherein the fluorine-containing hydrophobic polymer includes at least one selected from the group consisting of polyvinylidene fluoride, polytetrafluoroethylene, perfluoroalkoxy alkane, perfluoroethylene propene copolymer, ethylene tetrafluoroethylene copolymer, polychlorotrifluoroethylene, and ethylene chlorotrifluoroethylene copolymer.

Owing to this configuration, the negative electrode active material according to Technique 4 can more effectively suppress a decrease in the initial charge-discharge efficiency of the battery while also suppressing an increase in the internal resistance of the battery.

### (Technique 5)

The negative electrode active material according to Technique 4, wherein the fluorine-containing hydrophobic polymer includes polyvinylidene fluoride.

Owing to this configuration, the negative electrode active material according to Technique 5 can more effectively suppress a decrease in the initial charge-discharge efficiency of the battery while also suppressing an increase in the internal resistance of the battery.

### (Technique 6)

The negative electrode active material according to any one of Techniques 1 to 5, wherein the silicon-containing particle includes an ion-conducting phase and a silicon phase dispersed in the ion-conducting phase.

Owing to this configuration, the negative electrode active material according to Technique 6 can achieve both an increase in capacity due to silicon being contained and an improvement in charge-discharge cycle characteristics.

### (Technique 7)

The negative electrode active material according to Technique 6, wherein the ion-conducting phase includes at least one selected from the group consisting of a lithium-containing phase and a carbon phase.

Owing to this configuration, the negative electrode active material according to Technique 7 can improve the battery characteristics such as the initial charge-discharge efficiency and the charge-discharge cycle characteristics of the battery.

### (Technique 8)

The negative electrode active material according to Technique 7, wherein the lithium-containing phase includes at least one selected from the group consisting of a lithium aluminate phase and a lithium silicate phase.

Owing to this configuration, the negative electrode active material according to Technique 8 can improve the battery characteristics such as the initial charge-discharge efficiency and the charge-discharge cycle characteristics of the battery.

### (Technique 9)

The negative electrode active material according to any one of Techniques 1 to 8, wherein an amount of the boron-containing compound adhering to the surface of the silicon-containing particle is 1 mass% or more with respect to a mass of the silicon-containing particle.

Owing to this configuration, the negative electrode active material according to Technique 9 can more effectively suppress a decrease in the initial charge-discharge efficiency of the battery while also suppressing an increase in the internal resistance of the battery.

### (Technique 10)

The negative electrode active material according to any one of Techniques 1 to 9, wherein an amount of the fluorine-containing hydrophobic polymer adhering to the surface of the silicon-containing particle is 1 mass% or more with respect to a mass of the silicon-containing particle.

Owing to this configuration, the negative electrode active material according to Technique 10 can more effectively suppress a decrease in the initial charge-discharge efficiency of the battery while also suppressing an increase in the internal resistance of the battery.

### (Technique 11)

The negative electrode active material according to any one of Techniques 1 to 10, wherein a mass of the fluorine-containing hydrophobic polymer adhering to the surface of the silicon-containing particle is 0.5 times or more and 2 times or less a mass of the boron-containing compound adhering to the surface of the silicon-containing particle.

Owing to this configuration, the negative electrode active material according to Technique 11 can more effectively suppress a decrease in the initial charge-discharge efficiency of the battery while also suppressing an increase in the internal resistance of the battery.

### (Technique 12)

A battery including:
a negative electrode containing the negative electrode active material according to any one of Techniques 1 to 11;
a positive electrode; and
an electrolyte.

Owing to this configuration, the battery according to Technique 12 can suppress a decrease in initial charge-discharge efficiency while also suppressing an increase in internal resistance.

### EXAMPLES

Hereinafter, the present disclosure will be described in more detail using examples. The following examples are each merely one embodiment, and the present disclosure is not limited thereto.

### <Production of Negative Electrode Active Material>

### [Example 1]

### (Production of Composite Particles)

Coal pitch (MCP250, manufactured by JFE Chemical Corporation) as a carbon source and raw material silicon (3N, average particle diameter: 10 µm) were mixed at a mass ratio of 50:50. The mixture was charged into a pot (made of SUS, capacity: 500 mL) of a planetary ball mill (P-5, manufactured by Fritsch GmbH), 24 balls (diameter: 20 mm) made of SUS were placed in the pot, the pot was closed with a lid, and the mixture was crushed at 200 rpm for 50 hours in an inert atmosphere to obtain a composite of a silicon phase and the carbon source.

Next, the composite of the silicon phase and the carbon source was calcined in an inert gas atmosphere to carbonize the carbon source to obtain a sintered product in which the silicon phase was dispersed in a carbon phase containing amorphous carbon. Then, the sintered product was crushed using a jet mill to obtain Si-C composite particles having an average particle diameter of 10 µm.

The crystallite size of the silicon phase was 15 nm. The silicon phase was in the form of particles, and the average particle diameter of the silicon phase was 20 nm. The content rate of the silicon phase in the Si-C composite particles was 60 mass%.

### (Formation of Coating Layer)

The composite particles, H₃BO₃ as a boron-containing compound, and PVDF as a fluorine-containing hydrophobic polymer were dispersed in water. At this time, these materials were mixed such that H₃BO₃ was 2 mass% and PVDF was 2 mass% with respect to the composite particles. Then, the dispersion liquid was spray-dried to obtain a granulated powder. The spray-drying device used was "Mini Spray Dryer S-300" manufactured by Nihon BUCHI K.K. The obtained granulated powder was classified to form a coating layer on the surfaces of the Si-C composite particles.

Thus, particles of Example 1 were produced.

### [Example 2]

### (Production of Composite Particles)

Si-C composite particles were produced in the same manner as in Example 1.

### (Formation of Coating Layer)

A coating layer was formed on the surfaces of the Si-C composite particles in the same manner as in Example 1, except that Li₂B₄O₇ was used as the boron-containing compound.

### [Example 3]

### (Production of Composite Particles)

Si-C composite particles were produced in the same manner as in Example 1.

### (Formation of Coating Layer)

A coating layer was formed on the surfaces of the Si-C composite particles in the same manner as in Example 1, except that LiBO₂ was used as the boron-containing compound.

### [Example 4]

### (Production of Composite Particles)

Al₂O₃, Li₂CO₃, and B₂O₃ were mixed at a mass ratio of Al₂O₃:Li₂CO₃:B₂O₃ = 55:25:20. The mixture was calcined in ambient air at 750°C for 10 hours. The calcined product was crushed to obtain a raw material aluminate having an average particle diameter of 10 µm.

The raw material aluminate (average particle diameter: 10 µm) and raw material silicon (3N, average particle diameter: 10 µm) were mixed at a mass ratio of raw material aluminate : raw material silicon = 40:60. The obtained mixture was charged into a pot (made of SUS, capacity: 500 mL) of a planetary ball mill (P-5, manufactured by Fritsch GmbH). Next, 24 balls (diameter: 20 mm) made of SUS were placed in the pot, the pot was closed with a lid, and the mixture was crushed at 200 rpm for 50 hours in an inert atmosphere. Accordingly, a powdered mixture was obtained.

The obtained powdered mixture was taken out in the inert atmosphere, and the powdered mixture was calcined at 800°C for 4 hours in the inert atmosphere while applying a pressure of 200 MPa using a hot-pressing machine. Accordingly, a sintered product was obtained.

The obtained sintered product was crushed and passed through a 40-µm mesh. Thus, base particles (LAX particles) in which a silicon phase was dispersed in an alkali aluminate phase containing predetermined amounts of Li and B were obtained.

The obtained base particles and coal pitch (MCP250, manufactured by JFE Chemical Corporation) were mixed. At this time, the amount of mixed coal pitch was 5 parts by mass per 100 parts by mass of the base particles. The mixture was calcined at 800°C for 5 hours in an inert atmosphere to form a conductive layer on the surfaces of the base particles. Then, a sieve was used to obtain composite particles with an average particle diameter of 5 µm which were LAX composite particles each including a conductive layer.

### (Formation of Coating Layer)

A coating layer was formed on the surfaces of the LAX composite particles in the same manner as in Example 1.

### [Example 5]

### (Production of Composite Particles)

LAX composite particles were produced in the same manner as in Example 4.

### (Formation of Coating Layer)

A coating layer was formed on the surfaces of the LAX composite particles in the same manner as in Example 2.

### [Example 6]

### (Production of Composite Particles)

LAX composite particles were produced in the same manner as in Example 4.

### (Formation of Coating Layer)

A coating layer was formed on the surfaces of the LAX composite particles in the same manner as in Example 3.

### [Comparative Example 1]

### (Production of Composite Particles)

Si-C composite particles were produced in the same manner as in Example 1.

### (Formation of Coating Layer)

A coating layer was not formed. In other words, the Si-C composite particles were used directly as a negative electrode active material.

### [Comparative Example 2]

### (Production of Composite Particles)

Si-C composite particles were produced in the same manner as in Example 1.

### (Formation of Coating Layer)

A coating layer was formed on the surfaces of the Si-C composite particles in the same manner as in Example 1, except that PVDF was not added and H₃BO₃ was further mixed at 5 mass% with the composite particles.

### [Comparative Example 3]

### (Production of Composite Particles)

Si-C composite particles were produced in the same manner as in Example 1.

### (Formation of Coating Layer)

A coating layer was formed on the surfaces of the Si-C composite particles in the same manner as in Example 1, except that PVDF was not added and Li₂B₄O₇ was further mixed at 5 mass% with the composite particles.

### [Comparative Example 4]

### (Production of Composite Particles)

Si-C composite particles were produced in the same manner as in Example 1.

### (Formation of Coating Layer)

A coating layer was formed on the surfaces of the Si-C composite particles in the same manner as in Example 1, except that PVDF was not added and LiBO₂ was further mixed at 5 mass% with the composite particles.

### [Comparative Example 5]

### (Production of Composite Particles)

LAX composite particles were produced in the same manner as in Example 4.

### (Formation of Coating Layer)

A coating layer was not formed. In other words, the LAX composite particles were used directly as a negative electrode active material.

### [Comparative Example 6]

### (Production of Composite Particles)

LAX composite particles were produced in the same manner as in Example 4.

### (Formation of Coating Layer)

A coating layer was formed on the surfaces of the LAX composite particles in the same manner as in Example 4, except that PVDF was not added and H₃BO₃ was further mixed at 5 mass% with the composite particles.

### [Comparative Example 7]

### (Production of Composite Particles)

LAX composite particles were produced in the same manner as in Example 4.

### (Formation of Coating Layer)

A coating layer was formed on the surfaces of the LAX composite particles in the same manner as in Example 4, except that PVDF was not added and Li₂B₄O₇ was further mixed at 5 mass% with the composite particles.

### [Comparative Example 8]

### (Production of Composite Particles)

LAX composite particles were produced in the same manner as in Example 4.

### (Formation of Coating Layer)

A coating layer was formed on the surfaces of the LAX composite particles in the same manner as in Example 4, except that PVDF was not added and LiBO₂ was further mixed at 5 mass% with the composite particles.

### <Production of Battery>

Using the negative electrode active materials of Examples 1 to 6 and Comparative Examples 1 to 8, batteries of Examples 1 to 6 and Comparative Examples 1 to 8 were produced as follows.

### [Production of Negative Electrode]

The negative electrode active material produced in each example or comparative example and graphite were mixed at a mass ratio of negative electrode active material : graphite = 6:94 to obtain a mixture. The mixture was used as a negative electrode active material (hereinafter referred to as negative electrode active material mixture) for a negative electrode. The negative electrode active material mixture, carboxymethyl cellulose (CMC), and styrene butadiene rubber (SBR) were mixed at a mass ratio of negative electrode active material mixture : CMC : SBR = 97.5:1:1.5 to obtain a negative electrode mixture, and water was added to the negative electrode mixture, followed by stirring to prepare a negative electrode slurry. Next, the negative electrode slurry was applied to both sides of a copper foil which was a negative electrode current collector, and the coating film was dried and then rolled. The copper foil was cut to a predetermined size to produce a negative electrode in which a negative electrode mixture layer was formed on both sides of the negative electrode current collector. At this time, a negative electrode current collector exposed portion was provided at a part of the negative electrode.

### [Production of Positive Electrode]

A positive electrode active material, acetylene black, and PVDF were mixed at a mass ratio of positive electrode active material : acetylene black : PVDF = 95:2.5:2.5 to obtain a positive electrode mixture, and an appropriate amount of N-methyl-2-pyrrolidone (NMP) was added to the positive electrode mixture, followed by stirring to prepare a positive electrode slurry. A lithium transition metal composite oxide represented by LiNi_{0.88}Co_{0.09}Al_{0.03}O₂ was used as the positive electrode active material. Next, the positive electrode slurry was applied to both sides of an aluminum foil which was a positive electrode current collector, and the coating film was dried and then rolled. The aluminum foil was cut to a predetermined size to produce a positive electrode in which a positive electrode mixture layer was formed on both sides of the positive electrode current collector. At this time, a positive electrode current collector exposed portion was provided at a part of the positive electrode.

### [Preparation of Non-Aqueous Electrolyte]

A non-aqueous electrolyte was prepared by dissolving lithium hexafluorophosphate (LiPF₆) at a concentration of 1 mol/L in a mixed solvent in which ethylene carbonate (EC), ethyl methyl carbonate (EMC), and dimethyl carbonate (DMC) were mixed at a volume ratio of EC:EMC:DMC = 20:5:75.

### [Production of Non-Aqueous Electrolyte Secondary Battery]

A positive electrode lead made of aluminum was attached to the positive electrode current collector exposed portion of the positive electrode, and a negative electrode lead made of nickel was attached to the negative electrode current collector exposed portion of the negative electrode. The positive electrode and the negative electrode were spirally wound with a polyolefin separator interposed therebetween, and then pressed in the radial direction to produce a flat wound-type electrode assembly. This electrode assembly was housed in an exterior body made of an aluminum laminate sheet, the non-aqueous electrolyte was injected, and then an opening of the exterior body was sealed to obtain a battery.

### <Battery Evaluation>

The batteries of Examples 1 to 6 and Comparative Examples 1 to 8 were evaluated for initial charge-discharge efficiency, internal resistance of the battery, and charge-discharge cycle characteristics by the following methods.

### (Initial Charge-Discharge Efficiency)

For the batteries of Examples 1 to 6 and Comparative Examples 1 to 8, under an ambient temperature of 25°C, constant-current charging was performed at a current of 0.3C until the voltage reached 4.2 V, and then constant-voltage charging was performed at a voltage of 4.2 V until the current reached 0.02C. Then, constant-current discharging was performed at a current of 0.5C until the voltage reached 2.5 V. By this charging and discharging, the initial charge-discharge efficiency of the batteries of Examples 1 to 6 and Comparative Examples 1 to 8 was determined.

The results are shown in Table 1. Table 1 shows relative values for Examples 1 to 3 and Comparative Examples 1 to 4 with the charge-discharge efficiency of Comparative Example 1 taken as a reference (100%). Table 1 also shows relative values for Examples 4 to 6 and Comparative Examples 5 to 8 with the charge-discharge efficiency of Comparative Example 5 taken as a reference (100%).

### (Charge-Discharge Cycle Characteristics)

For the batteries of Examples 1 to 6 and Comparative Examples 1 to 8, under an ambient temperature of 25°C, constant-current charging was performed at a current of 0.3C until the voltage reached 4.2 V, and then constant-voltage charging was performed at a voltage of 4.2 V until the current reached 0.02C. Then, constant-current discharging was performed at a current of 0.5C until the voltage reached 2.5 V. The above charging and discharging were defined as one cycle, 350 cycles were performed, and a discharge capacity retention was calculated using the following formula. 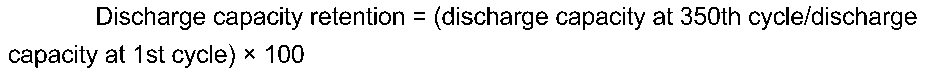 Discharge capacity retention = (discharge capacity at 350th cycle/discharge capacity at 1st cycle) × 100

The obtained capacity retention was regarded as the charge-discharge cycle characteristics. The results are shown in Table 1. Table 1 shows relative values for Examples 1 to 3 and Comparative Examples 1 to 4 with the capacity retention of Comparative Example 1 taken as a reference (100%). Table 1 also shows relative values for Examples 4 to 6 and Comparative Examples 5 to 8 with the capacity retention of Comparative Example 5 taken as a reference (100%).

### (Measurement of Internal Resistance)

The internal resistance of the batteries of Examples 1 to 6 and Comparative Examples 1 to 8 was measured. Initial charging and discharging were performed under the following conditions.

### (Charging and Discharging Conditions)

### · Initial charging and discharging conditions

Constant-current charging was performed at a current of 0.5 It (625 mA) until the battery voltage reached 4.2 V. Furthermore, constant-voltage charging was performed at a voltage of 4.2 V until the current reached 0.02 It (25 mA). Then, constant-current discharging was performed at a current of 0.5 It (625 mA) until the battery voltage reached 2.5 V.

Next, charging and discharging were performed under the following conditions, and then the initial internal resistance value of the battery was examined by the following method. The results are shown in Table 1.

### (Charging and Discharging Conditions)

Under a temperature condition of 25°C, constant-current charging was performed at a current of 0.3 It (375 mA) until the battery voltage reached 3.79 V. Furthermore, constant-voltage charging was performed at a constant voltage of 3.79 V until the current value reached 0.02 It (25 mA). And then, after a rest period of 2 hours, discharging was performed at a current of 0.2 It (250 mA) for 10 seconds.

Under the above charging conditions, after charging the test cells of each example and each comparative example, AC impedance measurements were performed in the range of 10 mHz to 100 kHz, and Cole-Cole plots were created. The internal resistance of each battery was determined from the size of the semicircle appearing in the obtained Cole-Cole plot.

The value obtained by the above method was regarded as the internal resistance. The results are shown in Table 1. Table 1 shows relative values for Examples 1 to 3 and Comparative Examples 1 to 4 with the internal resistance of Comparative Example 1 taken as a reference (100%). Table 1 also shows relative values for Examples 4 to 6 and Comparative Examples 5 to 8 with the internal resistance of Comparative Example 5 taken as a reference (100%).

**[Table 1]**

| | Composite particle | Coating layer | Addition amount of boron-containing compound (mass%) | Addition amount of PVDF (mass%) | Initial charge-discharge efficiency | Internal resistance | Capacity retention |
|---|---|---|---|---|---|---|---|
| Example 1 | Si-C | H₃BO₃+PVDF | 2 | 2 | 100.5 | 99.9 | 99.8 |
| Example 2 | Si-C | Li₂B₄O₇+PVDF | 2 | 2 | 100.7 | 102.3 | 100.1 |
| Example 3 | Si-C | LiBO₂+PVDF | 2 | 2 | 101.2 | 102.8 | 100.5 |
| Comparative Example 1 | Si-C | - | - | - | 100 | 100 | 100 |
| Comparative Example 2 | Si-C | H₃BO₃ | 5 | 0 | 101.4 | 106.4 | 100.6 |
| Comparative Example 3 | Si-C | Li₂B₄O₇ | 5 | 0 | 101.5 | 109.0 | 101.3 |
| Comparative Example 4 | Si-C | LiBO₂ | 5 | 0 | 101.2 | 117.0 | 101.2 |
| Example 4 | LAX | H₃BO₃+PVDF | 2 | 2 | 100.7 | 101.9 | 99.9 |
| Example 5 | LAX | Li₂B₄O₇+PVDF | 2 | 2 | 100.6 | 100.2 | 101.9 |
| Example 6 | LAX | LiBO₂+PVDF | 2 | 2 | 100.4 | 100.5 | 101.4 |
| Comparative Example 5 | LAX | - | - | - | 100 | 100 | 100 |
| Comparative Example 6 | LAX | H₃BO₃ | 5 | 0 | 100.7 | 109.9 | 101.9 |
| Comparative Example 7 | LAX | Li₂B₄O₇ | 5 | 0 | 100.7 | 112.2 | 101.7 |
| Comparative Example 8 | LAX | LiBO₂ | 5 | 0 | 101.2 | 113.0 | 102.6 |

### (Discussion)

As shown in Table 1, the battery of each example, in which the negative electrode active material included the coating layer containing both the boron-containing compound and the fluorine-containing hydrophobic polymer, was able to suppress a decrease in the initial charge-discharge efficiency of the battery while also suppressing an increase in the internal resistance of the battery. On the other hand, the batteries of Comparative Examples 2 to 4 and 6 to 8, in each of which the coating layer contained only the boron-containing compound, had initial charge-discharge efficiency similar to that of each example, but the internal resistance thereof was higher compared to the battery of each example.

### INDUSTRIAL APPLICABILITY

The technology of the present disclosure is useful for batteries such as lithium-ion secondary batteries.

## Claims

1. A negative electrode active material comprising:
a silicon-containing particle; and
a coating layer covering at least a part of a surface of the silicon-containing particle, wherein
the coating layer contains a boron-containing compound and a fluorine-containing hydrophobic polymer.

2. The negative electrode active material according to claim 1, wherein the boron-containing compound includes at least one selected from the group consisting of H₃BO₃, Li₂B₄O₇, LiBO₂, Na₂B₄O₇, NaBO₂, K₂B₄O₇, KBO₂, hydrates of H₃BO₃, hydrates of Li₂B₄O₇, hydrates of LiBO₂, hydrates of Na₂B₄O₇, hydrates of NaBO₂, hydrates of K₂B₄O₇, and hydrates of KBO₂.

3. The negative electrode active material according to claim 1, wherein the boron-containing compound contains lithium.

4. The negative electrode active material according to claim 1, wherein the fluorine-containing hydrophobic polymer includes at least one selected from the group consisting of polyvinylidene fluoride, polytetrafluoroethylene, perfluoroalkoxy alkane, perfluoroethylene propene copolymer, ethylene tetrafluoroethylene copolymer, polychlorotrifluoroethylene, and ethylene chlorotrifluoroethylene copolymer.

5. The negative electrode active material according to claim 4, wherein the fluorine-containing hydrophobic polymer includes polyvinylidene fluoride.

6. The negative electrode active material according to claim 1, wherein the silicon-containing particle includes an ion-conducting phase and a silicon phase dispersed in the ion-conducting phase.

7. The negative electrode active material according to claim 6, wherein the ion-conducting phase includes at least one selected from the group consisting of a lithium-containing phase and a carbon phase.

8. The negative electrode active material according to claim 7, wherein the lithium-containing phase includes at least one selected from the group consisting of a lithium aluminate phase and a lithium silicate phase.

9. The negative electrode active material according to claim 1, wherein an amount of the boron-containing compound adhering to the surface of the silicon-containing particle is 1 mass% or more with respect to a mass of the silicon-containing particle.

10. The negative electrode active material according to claim 1, wherein an amount of the fluorine-containing hydrophobic polymer adhering to the surface of the silicon-containing particle is 1 mass% or more with respect to a mass of the silicon-containing particle.

11. The negative electrode active material according to claim 1, wherein a mass of the fluorine-containing hydrophobic polymer adhering to the surface of the silicon-containing particle is 0.5 times or more and 2 times or less a mass of the boron-containing compound adhering to the surface of the silicon-containing particle.

12. A battery comprising:
a negative electrode containing the negative electrode active material according to any one of claims 1 to 11;
a positive electrode; and
an electrolyte.
